# EUROPEAN PATENT APPLICATION

(11) **EP 4 746 151 A1**
(43) Date of publication of application: **20.05.2026**
(21) Application number: 24844791.4
(22) Date of filing: 24.07.2024
(51) Int. Cl.: H01M 50/213, H01M 50/249, H01M 10/613, H01M 10/625, H01M 10/6551

(54) **COOLING SYSTEM AND BATTERY PACK**

(30) Priority: 24.07.2023 CN 202321955381 U
(71) Applicant: Eve Energy Co., Ltd., Huizhou, Guangdong 516006 (CN)
(72) Inventor: ZHAO, Yuhang, Huizhou, Guangdong 516006 (CN); QIN, Bo, Huizhou, Guangdong 516006 (CN); YAN, Shiwei, Huizhou, Guangdong 516006 (CN); WANG, Yuanyuan, Huizhou, Guangdong 516006 (CN)
(74) Representative: Nederlandsch Octrooibureau
(86) International application number: PCT/CN2024/107166
(87) International publication number: WO 2025/021100

(57) **Abstract**

A cooling system and a battery pack. A set of battery cells comprises a plurality of battery cells which are arranged. The cooling system comprises: a cooling assembly (2), comprising a first cold plate (21) and a second cold plate (22); and a pressure relief assembly (5), which is provided with a liquid cooling channel and a pressure relief channel which are arranged spaced apart from each other, the pressure relief channel being in communication with a pressure relief valve of each battery cell (1), wherein the first cold plate (21) is arranged on a side portion of a corresponding battery cell (1), the second cold plate (22) is arranged at the end of a corresponding battery cell (1) that is not provided with the pressure relief valve, and the cooling assembly (2) is in communication with the liquid cooling channel in parallel.

## Description

The present application claims priority to the Chinese patent application No. 202321955381.X filed with the China National Intellectual Property Administration (CNIPA) on July 24, 2023, and the entire contents of which are incorporated herein by reference.

### TECHNICAL FIELD

The present application relates to a technical field of battery heat dissipation, and in particular, to a cooling system and a battery pack.

### BACKGROUND

With the rapid development of new energy vehicles, users of pure electric vehicles have increasingly higher demands for driving range and charging rates, and the energy of battery cells is also increasing, leading to higher heat generation during operation. Meanwhile, with the increase in the number of battery cells and charging rates, maintaining temperature uniformity becomes more challenging, necessitating more efficient liquid cooling solutions to cool and equalize the temperature of battery cells.

### SUMMARY

In related technologies, cylindrical battery packs face the challenge of significant heat generation. Generally, a serpentine tube side liquid cooling solution is adopted, where the serpentine tube contacts the side of the battery cells, and the coolant flows within the serpentine tube cavity to achieve convective heat exchange with the battery cells. Due to the limited heat exchange area within the cavity, this solution can handle lower charging rates, but it struggles to maintain ideal temperatures under high-rate charging conditions, thereby affecting the lifespan of the battery cells and posing safety risks during driving.

In a first aspect, embodiments of the present application provide a cooling system for dissipating heat from a battery cell group, the battery cell group includes a plurality of battery cells. The cooling system includes at least one cooling assembly, wherein the cooling assembly includes a first cooling plate and a second cooling plate connected to the first cooling plate; a pressure relief assembly, abutting an end of each of the battery cells provided with a pressure relief valve, wherein the pressure relief assembly is provided with a liquid cooling channel and a pressure relief channel spaced from each other, the pressure relief channel is in communication with the pressure relief valve of the battery cell; wherein the first cooling plate is disposed on a side of a corresponding one of the battery cells, the second cooling plate is disposed at an end of a corresponding one of the battery cells not provided with the pressure relief valve, and the cooling assembly is in parallel communication with the liquid cooling channel.

In a second aspect, embodiments of the present application provide a battery pack, the battery pack including the cooling system and the battery cell group.

### Beneficial Effects

The cooling system provided by the present application includes a first cooling plate and a second cooling plate connected to the first cooling plate in the cooling assembly, with the first cooling plate disposed on the side of the battery cells in a corresponding row, the second cooling plate disposed at the top of the battery cells in a corresponding row, and the cooling assembly arranged in parallel with the liquid cooling channel such as a contact area for heat exchange with the battery cells can be increased, thereby improving the heat exchange efficiency and effect of the battery cells, addressing the high-temperature issues caused by ultra-fast charging of large cylindrical batteries, while further reducing the pressure drop of the cooling system and enhancing temperature uniformity.

The battery pack provided by the present application is designed based on the above cooling system, and beneficial effects of the battery pack are as described for the cooling system, which will not be repeated here.

### BRIEF DESCRIPTION OF THE DRAWINGS

FIG. 1 shows an exploded schematic view of a cooling system according to an embodiment of the present application;
FIG. 2 shows a first perspective structural schematic view of a cooling system according to an embodiment of the present application;
FIG. 3 shows a second perspective structural schematic view of a cooling system according to an embodiment of the present application;
FIG. 4 shows a schematic view of a top of a first stamped plate according to an embodiment of the present application; and
FIG. 5 shows a schematic view of a bottom of a first stamped plate according to an embodiment of the present application.

### DETAILED DESCRIPTION

In the description of the present application, it should be understood that terms such as "center," "longitudinal," "transverse," "length," "width," "thickness," "upper," "lower," "front," "rear," "left," "right," "vertical," "horizontal," "top," "bottom," "inner," "outer," "clockwise," and "counterclockwise" indicate orientations or positional relationships based on the orientations or positional relationships shown in the drawings. These terms are used solely for the convenience of describing the present application and simplifying the description, and do not indicate or imply that the referenced device or element must have a specific orientation, be constructed, or operate in a specific orientation, and thus should not be construed as limiting the present application. Additionally, the terms "first" and "second" are used for descriptive purposes only and should not be understood as indicating or implying relative importance or implicitly indicating the number of technical features. Thus, features defined with "first" or "second" may explicitly or implicitly include one or more of such features. In the description of the present application, "a plurality of" means two or more, unless otherwise expressly specified.

In the description of the present application, it should be noted that, unless otherwise expressly specified and defined, terms such as "installed," "connected," and "connection" should be understood broadly. For example, it may refer to a fixed connection, a detachable connection, or an integral connection; it may be a mechanical connection, an electrical connection, or a connection capable of mutual communication; it may be a direct connection or an indirect connection through an intermediate medium, or it may refer to internal communication between two elements or the interaction relationship between two elements. For those skilled in the art, the specific meanings of the above terms in the present application can be understood based on specific circumstances.

The following disclosure provides many different embodiments or examples to implement different structures of the present application. To simplify the disclosure of the present application, components and arrangements of specific examples are described below. Of course, these are merely examples and are not intended to limit the present application. Furthermore, the present application may repeat reference numerals and/or reference letters in different examples for the purpose of simplification and clarity, and such repetition does not indicate a relationship between the various embodiments and/or configurations discussed. Additionally, the present application provides examples of various specific processes and materials, but those skilled in the art may recognize the application of other processes and/or the use of other materials. In some instances, methods, means, elements, and circuits well-known to those skilled in the art are not described in detail to highlight the gist of the present application.

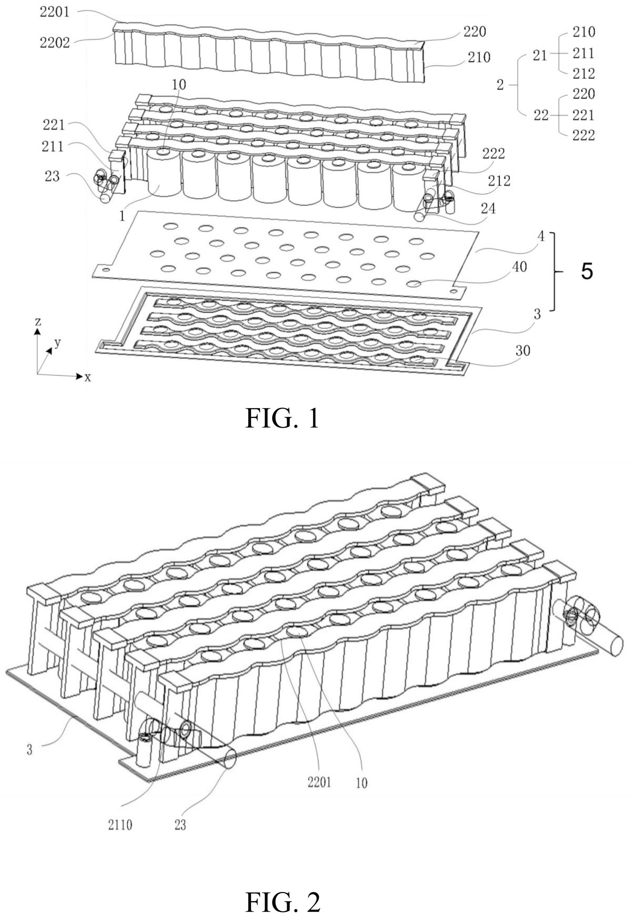

FIG. 1 shows an exploded schematic view of a cooling system according to an embodiment of the present application. As shown in FIG. 1, the cooling system can be used to dissipate heat from a battery cell group, the battery cell group includes a plurality of battery cells 1 arranged in rows.

Wherein, adjacent rows of the battery cells 1 may be arranged in a staggered manner. For example, in FIG. 1, a plurality of battery cells 1 may be arranged along a x-direction, and battery cells 1 in alternate rows may be arranged along a y-direction. Specifically, the plurality of battery cells 1 include odd-numbered rows and even-numbered rows, with the arrangement of battery cells 1 in a plurality of odd-numbered rows being consistent, and the arrangement of battery cells 1 in a plurality of even-numbered rows being consistent, such that different battery cells 1 in odd-numbered rows can be aligned along the y-direction, and different battery cells 1 in even-numbered rows can also be aligned along the y-direction. This arrangement allows for a more compact layout of the plurality of battery cells 1, increasing the energy density of the battery pack and saving space.

Referring to FIG. 1, the cooling system may include at least one cooling assembly 2. When the number of cooling assemblies 2 is plural, the plurality of cooling assemblies 2 are arranged parallel to each other. It should be noted that in FIG. 1, to more clearly illustrate the specific structure of the cooling assembly 2, a portion of the cooling assembly 2 located at an edge is moved upward and shown separately.

In one embodiment, the cooling assembly 2 includes a first cooling plate 21 and a second cooling plate 22 connected to the first cooling plate 21. In each cooling assembly 2, the number of first cooling plates 21 may be one or more, and the number of second cooling plates 22 may also be one or more. It can be understood that the number of first cooling plates 21 and second cooling plates 22 in the cooling assembly 2 can be set as needed.

Wherein, the first cooling plate 21 is disposed on the side of the battery cells 1 in a corresponding row. The first cooling plate 21 may extend along a row direction of the plurality of battery cells 1 (i.e., the x-direction in FIG. 1) and spread along a height direction of the plurality of battery cells 1 (i.e., a z-direction in FIG. 1).

The second cooling plate 22 is disposed at the top of the battery cells 1 in a corresponding row. The second cooling plate 22 may extend along the row direction of the plurality of battery cells 1 and spread along the thickness direction of the first cooling plate 21 (i.e., the y-direction in FIG. 1).

Optionally, an extension direction of the first cooling plate 21 may be parallel to an extension direction of the second cooling plate 22, and a spreading direction of the first cooling plate 21 may be perpendicular to a spreading direction of the second cooling plate 22. The first cooling plate 21 and the second cooling plate 22 form a T-shaped structure.

By using the second cooling plate to cover the top of the battery cells and the first cooling plate to cover the side of the battery cells, the embodiments of the present application can increase the contact area for heat exchange with the battery cells, thereby improving the heat exchange efficiency and temperature uniformity of the battery cells, enhancing the heat exchange effect, and addressing the high-temperature issues caused by ultra-fast charging of large cylindrical batteries.

In one embodiment, the first cooling plate 21 includes a first cooling plate body 210, the first cooling plate body 210 is installed between two adjacent rows of the battery cells 1 along the height direction of the battery cells 1 and contacts the two adjacent rows of the battery cells 1. In some embodiments, the first cooling plate body 210 may also be disposed on one side of a row of the battery cells 1, for example, on one side of a row of battery cells 1 located at the edge, where the first cooling plate body 210 contacts the battery cells 1 in the edge row on a single side rather than both sides.

In one embodiment, the second cooling plate 22 includes a second cooling plate body 220, and the second cooling plate body 220 is laid flat on the top surface of two adjacent rows of the battery cells 1. Each battery cell 1 has a pole 10 protruding from a top surface of the battery cell 1. The second cooling plate body 220 has a first plate edge 2201 and a second plate edge 2202 opposite to each other, and the first plate edge 2201 and the second plate edge 2202 respectively contact the poles 10 of the two adjacent rows of battery cells 1.

For example, the first plate edge 2201 may be engaged with the poles 10 of one row of the two adjacent rows of battery cells 1, and the second plate edge 2202 may be engaged with the poles 10 of the other row of the two adjacent rows of battery cells 1. At least one of the first plate edge 2201 and the second plate edge 2202 is serpentine (or wavy). That is, both the first plate edge 2201 and the second plate edge 2202 may be serpentine, or the first plate edge 2201 may be serpentine while the second plate edge 2202 is straight or another shape.

FIG. 2 shows a first perspective structural schematic view of a cooling system according to an embodiment of the present application. Referring to FIG. 2, taking the first plate edge 2201 as serpentine as an example, the first plate edge 2201 may include a plurality of arc segments, which may be convex segments or concave segments. The convex segments and concave segments are arranged alternately. For example, the concave segments engage with corresponding poles 10, and the convex segments extend between adjacent two of the poles 10, thereby enhancing the structural strength inside the battery pack through the engagement of the first cooling plate with the poles while spreading the contact area between the first cooling plate and the top surface of the battery cells, thus improving the heat exchange effect at the top of the battery cells.

In one embodiment, the first cooling plate 21 further includes a first side plate 211 and a second side plate 212 disposed at both ends of the first cooling plate body 210. The shape of the first side plate 211 may be the same as that of the second side plate 212, for example, both the first side plate 211 and the second side plate 212 may be rectangular blocks. The first side plate 211 is connected to an end of the first cooling plate body 210 and may be integrally formed with the first cooling plate body 210; the second side plate 212 is connected to another end of the first cooling plate body 210 and may also be integrally formed with the first cooling plate body 210.

In one embodiment, the second cooling plate 22 further includes a first top plate 221 and a second top plate 222 disposed at both ends of the second cooling plate body 220. The shape of the first top plate 221 may be the same as that of the second top plate 222, for example, both the first top plate 221 and the second top plate 222 may be rectangular blocks. The first top plate 221 is connected to an end of the second cooling plate body 220 and may be integrally formed with the second cooling plate body 220; the second top plate 222 is connected to another end of the second cooling plate body 220 and may also be integrally formed with the second cooling plate body 220.

In one embodiment, both the first side plate 211 and the second side plate 212 spread along the height direction of the plurality of battery cells 1, and both the first top plate 221 and the second top plate 222 spread along a thickness direction of the first cooling plate 21. The first top plate 221 is disposed on the first side plate 211 to form a T-shaped structure; the second top plate 222 is disposed on the second side plate 212 to form another T-shaped structure.

In one embodiment, the first side plate 211 is provided with a first mounting hole 2110 penetrating the first side plate 211, allowing a first cooling pipeline 23 to pass through the first mounting hole 2110. For example, the first cooling pipeline 23 is an inlet pipeline used to distribute incoming coolant to each cooling assembly 2.

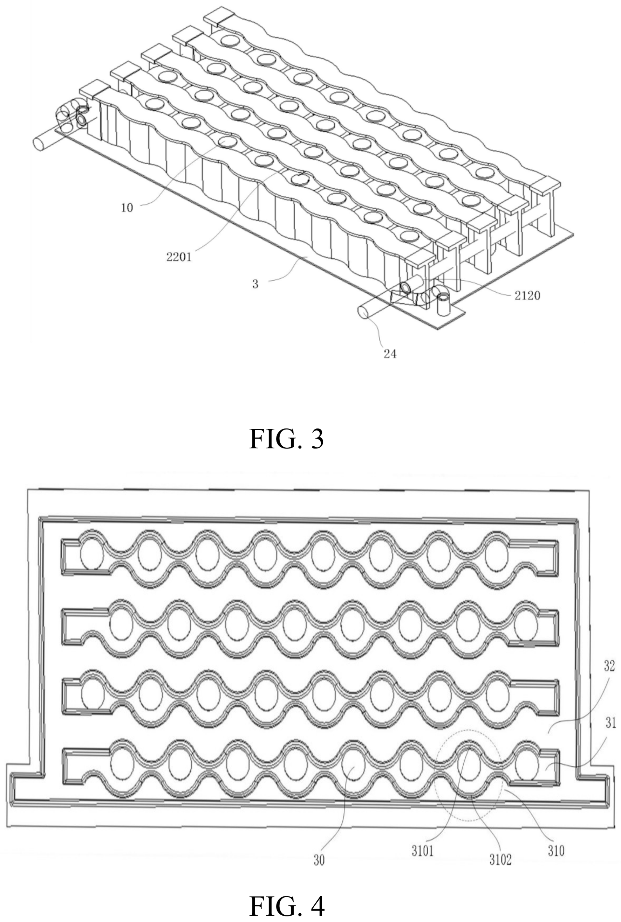

FIG. 3 shows a second perspective structural schematic view of a cooling system according to an embodiment of the present application. As shown in FIG. 3, the second side plate 212 is provided with a second mounting hole 2120 penetrating the second side plate 212, allowing a second cooling pipeline 24 to pass through the second mounting hole 2120. For example, the second cooling pipeline 24 is an outlet pipeline used to collect coolant from each cooling assembly 2. The first cooling pipeline 23, the second cooling pipeline 24, and each cooling assembly 2 together form a circulation of the cooling medium to carry away the heat from the battery cells 1. In the present application, the cooling medium may be a coolant. The cooling medium may also take other forms, and the present application does not limit the specific form of the cooling medium.

Further, referring to FIGS. 1 to 3, the cooling system may further include a pressure relief assembly 5, with a plurality of battery cells 1 disposed on the pressure relief assembly 5. The pressure relief assembly 5 has a top and a bottom, with the top of the pressure relief assembly 5 facing the plurality of battery cells 1. The pressure relief assembly 5 is disposed on the side of a bottom of the plurality of battery cells 1, and the pressure relief assembly 5 spreads along the thickness direction of the first cooling plate 21.

In one embodiment, the pressure relief assembly 5 abuts an end of each of the battery cells 1 provided with a pressure relief valve, and the pressure relief assembly 5 is provided with a liquid cooling channel and a pressure relief channel spaced from each other, the pressure relief channel is in communication with the pressure relief valve of the battery cell 1. The pressure relief assembly 5 includes a first stamped plate 3 and a second stamped plate 4.

FIG. 4 shows a schematic view of the top of a first stamped plate according to an embodiment of the present application. As shown in FIG. 4, viewing a top of the first stamped plate 3 from top to bottom in FIG. 1, the top of the first stamped plate 3 may be provided with a plurality of first convex portions 31 and a first concave portion 32. The plurality of first convex portions 31 may be spaced along the row direction of the plurality of battery cells 1 and may be parallel to each other. The first concave portion 32 may be located between adjacent two of the first convex portions 31. One of the first concave portion 32 and the first convex portions 31 is the liquid cooling channel, and the other is the pressure relief channel.

In one embodiment, the first convex portion 31 may include a plurality of first sub-portions 310, the plurality of first sub-portions 310 are interconnected. Opposite sides of the first sub-portion 310 may be arc segments with opposite bending directions, such as arc segment 3101 and arc segment 3102. The first sub-portion 310 may be provided with a clearance hole 30 penetrating the first sub-portion 310, the clearance hole 30 is adjacent to one of the arc segments of the first sub-portion 310.

In one embodiment, the pressure relief assembly 5 has a uniform wall thickness and is formed with concave and convex shapes. Specifically, the first stamped plate 3 has a uniform wall thickness and is formed with concave and convex shapes.

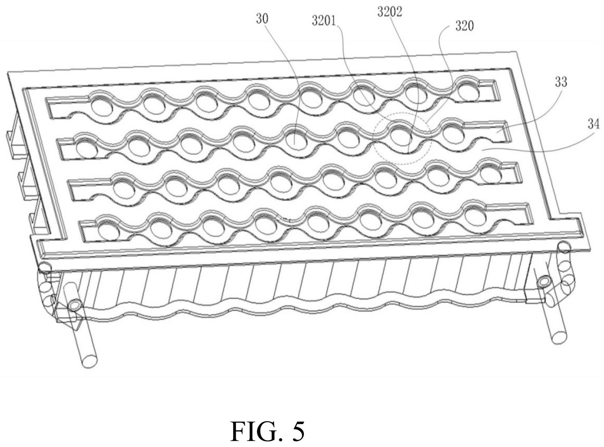

FIG. 5 shows a schematic view of a bottom of a first stamped plate according to an embodiment of the present application. As shown in FIG. 5, viewing the bottom of the first stamped plate 3 from bottom to top in FIG. 1, the bottom of the first stamped plate 3 may be provided with a plurality of second concave portions 33 and a second convex portion 34. The plurality of second concave portions 33 may be spaced along the row direction of the plurality of battery cells 1 and may be parallel to each other. The second convex portion 34 may be located between adjacent two of the second concave portions 33.

In one embodiment, the second concave portion 33 may include a plurality of second sub-portions 320, and the plurality of second sub-portions 320 are interconnected. The opposite sides of the second sub-portion 320 may be arc segments with opposite bending directions, such as arc segment 3201 and arc segment 3202. The second sub-portion 320 may be provided with a clearance hole 30 penetrating the second sub-portion 320, and the clearance hole 30 is adjacent to one of the arc segments of the second sub-portion 320.

In one embodiment, as shown in FIG. 1, the pressure relief assembly 5 may further include a second stamped plate 4, the second stamped plate 4 is disposed on the first stamped plate 3 and located between the first stamped plate 3 and the bottom of the plurality of battery cells 1.

In one embodiment, the first concave portion 32 is spaced from the second stamped plate 4 to form the liquid cooling channel, the first convex portion 31 abuts the second stamped plate 4, and a side of the first convex portion 31 facing away from the second stamped plate 4 forms the pressure relief channel.

In one embodiment, both the first convex portion 31 and the second stamped plate 4 are provided with clearance holes in communication with each other, and the clearance holes are aligned with the pressure relief valves of the battery cells. For example, the second stamped plate 4 may be provided with a plurality of clearance holes 40, the clearance holes 40, the clearance holes 30, and the battery cells 1 are correspondingly arranged. Optionally, the second stamped plate 4 may have a flat structure, and the second stamped plate 4 covers the top of the first stamped plate 3.

In one embodiment, both the first convex portion 31 and the second concave portion 33 are wavy. By designing clearance holes for the pressure relief valves at the bottom of the battery cells, the advantages of pressure relief at the bottom of cylindrical battery cells are retained. In the event of thermal runaway, flames will not be directed toward the passenger compartment, thereby improving safety. Additionally, setting flow channels of the stamped plate as wavy further enhances the cooling performance of the battery cells, and the wavy flow channel design facilitates the formation of flow disturbances, thereby enhancing the heat exchange performance of the cooling plate.

In one embodiment, the second cooling plate 22 is disposed at an end of a corresponding one of the battery cells 1 not provided with the pressure relief valve, and the cooling assembly 2 is in parallel communication with the liquid cooling channel. The first stamped plate 3 is arranged in parallel with the cooling assembly 2, and the second stamped plate 4 is arranged in parallel with the cooling assembly 2. By designing the cooling assembly and the stamped plates in full parallel, the pressure drop of the cooling system is further reduced, while enhancing the temperature uniformity effect.

Additionally, the present application also provides a battery pack, the battery pack including the cooling system and the battery cell group.

In summary, the embodiments of the present application provide a cooling system by disposing a first cooling plate and a second cooling plate connected to the first cooling plate in the cooling assembly, with the first cooling plate disposed on the side of the battery cells in a corresponding row, the second cooling plate disposed at the top of the battery cells in a corresponding row, and the cooling assembly arranged in parallel with the liquid cooling channel such that a contact area for heat exchange with the battery cells can be increased, thereby improving the heat exchange efficiency and effect of the battery cells, addressing the high-temperature issues caused by ultra-fast charging of large cylindrical batteries, while further reducing the pressure drop of the cooling system and enhancing temperature uniformity.

In the above embodiments, the descriptions of each embodiment have their own emphases, and parts not detailed in one embodiment can be referred to the related descriptions of other embodiments.

## Claims

1. A cooling system, wherein the cooling system is configured to dissipate heat from a battery cell group, the battery cell group comprises a plurality of battery cells (1), and the cooling system comprises:
at least one cooling assembly (2), wherein the cooling assembly (2) comprises a first cooling plate (21) and a second cooling plate (22) connected to the first cooling plate (21);
a pressure relief assembly (5) abutting an end of each of the battery cells (1) provided with a pressure relief valve, wherein the pressure relief assembly (5) is provided with a liquid cooling channel and a pressure relief channel spaced from each other, and the pressure relief channel is in communication with the pressure relief valve of the battery cell (1);
wherein the first cooling plate (21) is disposed on a side of a corresponding one of the battery cells (1), the second cooling plate (22) is disposed at an end of a corresponding one of the battery cells (1) not provided with the pressure relief valves, and the cooling assembly (2) is in parallel communication with the liquid cooling channel.

2. The cooling system according to claim 1, wherein the first cooling plate (21) extends along a distributed direction of the plurality of battery cells (1) and spreads along a height direction of the plurality of battery cells (1).

3. The cooling system according to claim 1, wherein the second cooling plate (22) extends along a distributed direction of the plurality of battery cells (1) and spreads along a thickness direction of the first cooling plate (21).

4. The cooling system according to any one of claims 1 to 3, wherein an extension direction of the first cooling plate (21) is parallel to an extension direction of the second cooling plate (22), a spreading direction of the first cooling plate (21) is perpendicular to a spreading direction of the second cooling plate (22), and the first cooling plate (21) and the second cooling plate (22) form a T-shaped structure.

5. The cooling system according to claim 1, wherein the first cooling plate (21) comprises a first cooling plate body (210), the first cooling plate body (210) is installed between two adjacent rows of the battery cells (1) along the height direction of the battery cells (1) and contacts the two adjacent rows of the battery cells (1).

6. The cooling system according to claim 5, wherein the first cooling plate (21) further comprises a first side plate (211) and a second side plate (212) disposed at both ends of the first cooling plate body (210), the first side plate (211) is connected to an end of the first cooling plate body (210), the second side plate (212) is connected to another end of the first cooling plate body (210), and the first side plate (211) and the second side plate (212) are respectively configured for liquid inlet and outlet.

7. The cooling system according to claim 1, wherein the second cooling plate (22) comprises a second cooling plate body (220), the second cooling plate body (220) is laid flat on the top surface of two adjacent rows of the battery cells (1).

8. The cooling system according to claim 7, wherein the second cooling plate (22) further comprises a first top plate (221) and a second top plate (222) disposed at both ends of the second cooling plate body (220), the first cooling plate (21) comprises a first cooling plate body (210), and a first side plate (211) and a second side plate (212) disposed at both ends of the first cooling plate body (210), the first top plate (221) is disposed on the first side plate (211) to form a T-shaped structure, and the second top plate (222) is disposed on the second side plate (212) to form another T-shaped structure.

9. The cooling system according to claim 7, wherein each battery cell (1) has a pole (10) protruding from a top surface of the battery cell (1), the second cooling plate body (220) has a first plate edge (2201) and a second plate edge (2202) opposite to each other, and the first plate edge (2201) and the second plate edge (2202) are respectively arranged opposite to the poles (10) of two adjacent rows of the battery cells (1).

10. The cooling system according to claim 7, wherein the second cooling plate (22) further comprises a first top plate (221) and a second top plate (222) disposed at both ends of the second cooling plate body (220), the first top plate (221) is connected to an end of the second cooling plate body (220), the second top plate (222) is connected to another end of the second cooling plate body (220), and the first top plate (221) and the second top plate (222) are respectively configured for liquid inlet and outlet.

11. The cooling system according to claim 1, wherein the pressure relief assembly (5) comprises a first stamped plate (3) and a second stamped plate (4), a top of the first stamped plate (3) is provided with a plurality of first convex portions (31) and a first concave portion (32), the first concave portion (32) is located between adjacent two of the first convex portions (31), one of the first concave portion (32) and the first convex portions (31) is the liquid cooling channel, and the other is the pressure relief channel.

12. The cooling system according to claim 11, wherein the first convex portion (31) comprises a plurality of first sub-portions (310), the plurality of first sub-portions (310) are interconnected, and opposite sides of the first sub-portion (310) are arc segments with opposite bending directions.

13. The cooling system according to claim 11, wherein a bottom of the first stamped plate (3) may be provided with a plurality of second concave portions (33) and a second convex portion (34), the second convex portion (34) is located between adjacent two of the second concave portions (33), and both the first convex portion (31) and the second concave portion (33) are configured as wavy.

14. The cooling system according to claim 11, wherein the pressure relief assembly (5) has a uniform wall thickness and is formed with concave and convex shapes.

15. The cooling system according to claim 11, wherein the first concave portion (32) is spaced from the second stamped plate (4) to form the liquid cooling channel, the first convex portion (31) abuts the second stamped plate (4), and a side of the first convex portion (31) facing away from the second stamped plate (4) forms the pressure relief channel.

16. The cooling system according to claim 11, wherein both the first convex portion (31) and the second stamped plate (4) are provided with clearance holes in communication with each other, and the clearance holes are aligned with the pressure relief valves of the battery cells.

17. A battery pack, wherein the battery pack comprises the cooling system and the battery cell group according to any one of claims 1 to 16.
